# FASCICULE DE BREVET EUROPEEN

(11) **EP 0 836 899 B1**
(45) Date de publication et mention de la délivrance du brevet: **26.09.2001**
(21) Numéro de dépôt: 97402443.2
(22) Date de dépôt: 16.10.1997
(51) Int. Cl.: B21D 26/02, B21D 53/78

(54) **Procédé de fabrication d'une aube creuse de turbomachine**
Verfahren zur Herstellung einer hohlen Turbinenschaufel
Method of fabricating a hollow turbine blade

(30) Priorité: 16.10.1996 FR 9612601
(43) Date de publication de la demande: 22.04.1998
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Calle, Gilles Michel Georges Louis, 77500 - Chelles (FR); Klein, Gilles Charles, 95540 - Mery / Oise (FR)

(56) Documents cités:
- EP-A- 0 468 221
- EP-A- 0 507 067
- EP-A- 0 568 201
- EP-A- 0 700 738
- GB-A- 2 280 867

## Description

La présente invention concerne un procédé de fabrication d'une aube creuse de turbomachine assemblée par soudage-diffusion et formée par pression de gaz et formage superplastique.

Les avantages découlant de l'utilisation d'aubes à grande corde pour les turbomachines sont apparus notamment dans le cas des aubes de rotor de soufflante des turboréacteurs à double flux. Ces aubes doivent répondre à des conditions sévères d'utilisation et posséder notamment des caractéristiques mécaniques suffisantes associées à des propriétés antivibratoires et de résistance aux impacts de corps étranger. L'objectif de vitesses suffisantes en bout d'aube a en outre amené à rechercher une réduction des masses. Ce but est notamment atteint par l'utilisation d'aubes creuses.

EP-A-0 700 738 décrit un procédé de fabrication d'une aube creuse de turbomachine, notamment une aube de rotor de soufflante à grande corde. Ledit procédé de fabrication prévoit le découlé opératoire général selon les étapes suivantes :
a) définition des pièces constitutives de l'aube par CFAO/Conception et Fabrication Assistés par Ordinateur et simulation numérique ;
b) forgeage sur presse des pièces primaires constituant l'aube par matriçage ;
c) usinage des pièces primaires ;
d) dépôt de barrières de diffusion suivant un motif prédéfini;
e) assemblage des pièces primaires suivi du soudage-diffusion par pression isostatique à chaud ;
f) gonflage par pression de gaz et formage superplastique ;
g) usinage final.

FR 96.07329 permet de réaliser au cours du procédé de fabrication décrit ci-dessus une opération remarquable de mise en forme par vrillage sans risque de provoquer des ondulations de type flambage suivant la fibre neutre grâce à une opération préalable d'allongement des fibres réparties de part et d'autre de ladite fibre neutre.

FR-A-2.739.045 qui représente l'état de la technique la plus proche, et FR-A-2 752 388 prévoient avant le début du gonflage à l'étape (f) de réaliser un décollement des pièces primaires nécessaire pour réaliser l'étape (f) compte tenu de l'état de compactage des barrières de diffusion. L'efficacité dudit décollement est obtenue par le formage à chaud d'un conduit d'alimentation dans la zone où la pièce possède des voies de communication inter-cavités. Il en résulte une alimentation régulière et simultanée des cavités tout en maitrisant les vitesses de déformation dès le début du cycle de gonflage de l'étape (f), garantissant ainsi la régularité et la forme des raidisseurs. Il s'ensuit un déroulé opératoire général selon les étapes suivantes :
a) définition des pièces contitutives de l'aube par CFAO et simulation numérique ;
b) forgeage sur presse des pièces primaires constituant l'aube;
c) usinage des pièces primaires ;
d) dépôt des barrières de diffusion suivant un motif prédéfini;
e) assemblage des pièces primaires suivi du soudage diffusion par pression isostatique à chaud ;
f) mise en forme à chaud de l'ensemble soudé par mise à longueur des fibres ;
g) mise en forme à chaud d'un conduit d'alimentation suivi d'un décollement des zones revêtues de produit auto-diffusant;
h) gonflage par pression gazeuse et formage superplastique ;
i) usinage final.

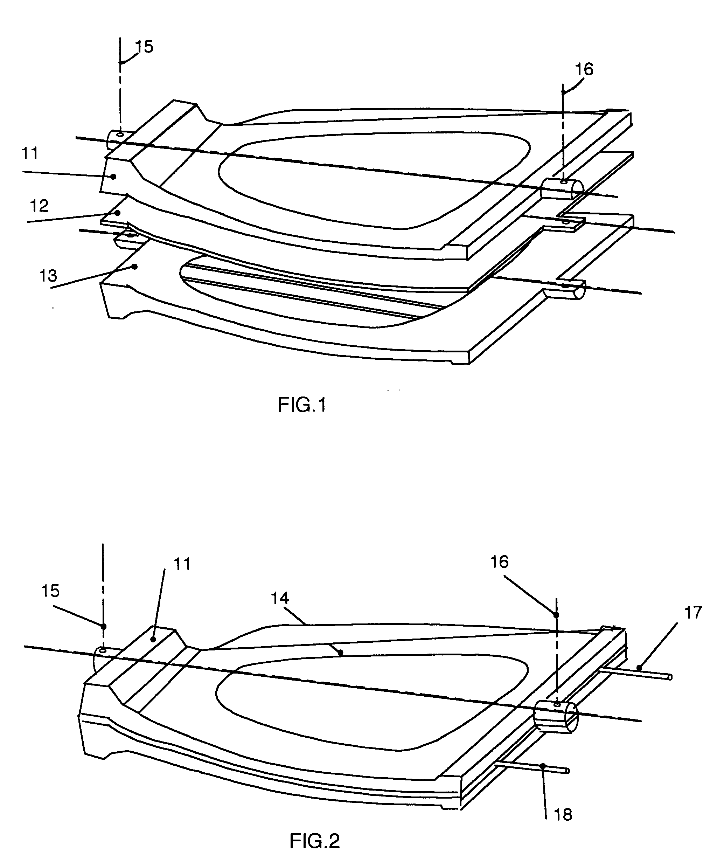

A l'étape (d) ci-dessus il est également connu d'effectuer le dépôt d'un produit d'anti-diffusion notamment suivant un procédé sérigraphique. Des exemples de réalisation sont détaillés par FR-A-2.739.045. Comme représenté sur la figure 1, une aube creuse de soufflante de turbomachine comporte à ce stade de fabrication, dans l'exemple représenté, trois pièces primaires constituant une peau d'extrados 11, une tôle centrale 12 et une peau d'intrados 13 et au moins deux faces sont enduites du produit d'anti-diffusion suivant le motif prédéfini. Comme montré sur la figure 2, les pièces primaires 11, 12 et 13 sont assemblées pour former l'ensemble 14, notamment en utilisant deux pions de centrage 15 et 16 puis l'ensemble est soudé en périphérie en condition d'atmosphère neutre afin de ne pas polluer les surfaces de la pièce. Avant la fermeture complète de l'ensemble par cette soudure périphérique, un ou plusieurs tubes tels que 17 et 18 sont ajoutés de manière à communiquer avec les parties internes enduites de produit antidiffusant. L'ensemble est alors prêt pour le soudage par diffusion dont la température de soudage est supérieure à 880°C pour une aube en alliage de titane du type TA6V ou TAD4E.

Un traitement de précuisson du produit d'anti-diffusion, comme préconisé dans la demande FR 95.11300 rappelée ci-dessus est souvent nécessaire avant le soudage-diffusion. En effet, les liants organiques contenus dans les produits antidiffusants, nécessaires pour véhiculer et assurer une tenue mécanique du dépôt sur les surfaces enduites, doivent être éliminés afin de permettre le contact intime des surfaces et de ne pas polluer les surfaces en contact lors des montées à température supérieure à 500°C pour le soudage diffusion. Les liants sont éliminés en totalité par dégradation thermique entre 200° et 400°C, les gaz produits sont éliminés au moyen d'une circulation d'un gaz neutre, de l'argon par exemple ou par pompage. A ce stade les particules du produit antidiffusant deviennent très mobiles puisque les liaisons mécaniques assurées par le liant sont totalement dégradées, ce qui rend toutes les manipulations de la pièce très délicates pour éviter toutes les migrations de particules sur les zones non revêtues.

Un des buts de l'invention est d'éviter les inconvénients rappelés ci-dessus des procédés connus antérieurs grâce à un procédé permettant de manipuler un ensemble soudé en périphérie tel que 14 après dégradation et élimination complète du liant contenu dans le produit antidiffusant sans encourir le risque de migration des particules dans des zones destinées à être soudées.

Le procédé de fabrication d'une aube creuse de turbomachine conforme à l'invention comporte à la suite du traitement de précuisson du produit d'anti-diffusion assurant la dégradation et l'élimination complète du liant contenu dans ledit produit d'anti-diffusion et avant l'opération de soudage-diffusion par pression isostatique de l'étape (e) une sous étape complémentaire (e1), effectuée sans déplacer les pièces après ledit traitement de précuisson et consistant à effectuer une mise sous vide de l'intérieur de l'ensemble d'aube, et simultanément à chauffer progressivement à une vitesse V et jusqu'à une température T déterminée de façon à obtenir une déformation plastique permanente des pièces et à cette température T, l'intérieur dudit ensemble d'aube est maintenu sous vide tandis qu'une pression isostatique est appliquée à l'extérieur dudit ensemble d'aube, ces conditions étant maintenues de manière à assurer un compactage du produit d'anti-diffusion et un présoudage des zones non revêtues de produit d'anti-diffusion.

De manière avantageuse l'intérieur de l'ensemble d'aube est maintenu à un vide compris entre 1Pa et 10⁻⁴Pa tandis qu'une pression isostatique comprise entre 10⁵Pa et 5x10⁵Pa est appliquée à l'extérieur dudit ensemble d'aube, ces conditions étant maintenues pendant une heure.

De manière avantageuse, lors de la mise sous vide de l'intérieur de l'ensemble d'aube on peut effectuer une mise sous vide simultanée de l'enceinte de four où est placé l'ensemble d'aube.

D'autres caractéristiques et avantages de l'invention seront mieux compris à la lecture de la description qui va suivre d'un mode de réalisation de l'invention, en référence aux dessins annexés sur lesquels :
- la figure 1 représente une vue en perspective des pièces primaires d'une aube creuse dans le procédé de fabrication conforme à l'invention ;
- la figure 2 représente une vue en perspective de l'aube creuse de la figure 1 avant l'étape du soudage-diffusion.

Dans l'exemple montré à la figure 1 d'un stade intermédiaire d'un procédé de fabrication d'une aube de rotor de soufflante à grande corde, une pièce primaire d'extrados 11, une tôle centrale 12 et une pièce primaire d'intrados 13 sont utilisées. Comme il est connu en soi et à ce stade, au moins deux faces desdites pièces primaires sont enduites d'un produit d'anti-diffusion suivant un motif prédéfini, notamment et comme il est connu suivant un procédé sérigraphique.

L'ensemble 14 est ensuite empilé, comme le montre la figure 2, notamment en utilisant deux pions de centrage 15 et 16, puis soudé en périphérie en condition d'atmosphère neutre. Avant la fermeture complète de l'ensemble par cette soudure périphérique un ou plusieurs tubes tels que 17 et 18 sont ajoutés de manière à communiquer avec les parties internes enduites de produit antidiffusant. L'ensemble 14 est alors prêt pour le soudage par diffusion dont la température de soudage est supérieure à 880°C pour une aube en alliage de titane du type TA6V.

Avant d'effectuer l'opération de soudage toutefois et de manière remarquable conforme à l'invention, une sous-étape e1 complémentaire est prévue après un traitement de précuisson du produit d'anti-diffusion.

Tout d'abord et comme il est connu en soi, afin d'éviter toute pollution des surfaces en contact lors des opérations ultérieures à hautes températures, les liants organiques contenus dans les produits d'antidiffusion doivent être éliminés. Dans ce but, on effectue une dégradation et élimination des éléments volatils du produit d'antidiffusion par dégradation thermique à une température comprise entre 200° et 400°C pendant plusieurs heures tout en assurant à l'intérieur de l'ensemble d'aube 14 une circulation d'un gaz neutre tel qu'argon à un débit de 11 à 51 par minute. La circulation d'argon est arrêtée dès que la dégradation complète et l'évacuation totale des gaz produits par les liants du produit d'anti-diffusion sont entièrement réalisées. La sous-étape (e1) complémentaire consiste alors, sans déplacer l'ensemble d'aube et dans la continuité dans l'enceinte du traitement précédent, à effectuer une mise sous vide à l'intérieur de l'ensemble d'aube 14. On effectue alors une montée progressive en température. Dans l'exemple de pièces en alliage de titane du type TA6V, la température atteinte est de 925°C, à une vitesse de montée de 5 à 35° par minute en fonction de l'épaisseur de pièce. Pour des alliages de titane du type TA6V ou TAD4E, en fonction de la définition des pièces, la température atteinte se situe entre 900° et 940°C. Dès que la température recherchée est atteinte un vide compris entre 1Pa et 10⁻⁴ Pa est maintenu à l'intérieur de l'ensemble d'aube 14 et une pression comprise entre 10⁵Pa et 5x10⁵Pa est introduite dans l'enceinte extérieure entourant l'ensemble d'aube 14. Ces conditions de température et de pressions sont maintenues pendant une heure. A l'issue de la sous-étape (e1) et avant d'effectuer l'opération proprement dite de soudage-diffusion sous pression isostatique de l'ensemble d'aube 14, il en résulte un affaissement des peaux extérieures 11 et 13 sur la tôle centrale 12 provoquant un compactage des particules du produit d'anti-diffusion ainsi qu'un présoudage ou précollage des zones de pièce non revêtues de produit d'anti-diffusion.

De manière avantageuse, lors de la mise sous vide de l'intérieur de l'ensemble d'aube 14, on peut également effectuer une mise sous vide simultanée de l'enceinte de four _où est placé l'ensemble d'aube 14.

## Revendications

1. Procédé de fabrication d'une aube creuse de turbomachine, notamment une aube de rotor de soufflante à grande corde, comportant les étapes suivantes :
a) à partir de la définition d'une aube à obtenir, étude en utilisant les moyens de Conception et Fabrication Assistés par Ordinateur/CFAO et réalisation d'une simulation numérique de la mise à plat des pièces constitutives de l'aube ;
b) forgeage sur presse des pièces primaires par matriçage ;
c) usinage des pièces primaires ;
d) dépôt de barrières de diffusion suivant un motif prédéfini;
e) assemblage des pièces primaires et mise en place dans une enceinte de four, suivie d'un traitement de précuisson du produit d'anti-diffusion assurant la dégradation et l'élimination complète du liant contenu dans ledit produit d'anti-diffusion
e1) puis, en enchaînement et sans déplacer les pièces après ladite dégradation de liant, mise sous vide de l'intérieur dudit ensemble d'aube (14) et simultanément une montée progressive à une vitesse V et jusqu'à une température T déterminées de façon à obtenir une déformation plastique permanente des pièces et à cette température T, maintien de l'intérieur dudit ensemble d'aube (14) sous vide tandis qu'une pression isostatique est appliquée à l'extérieur dudit ensemble d'aube, ces conditions de température et pressions étant maintenues, de manière à assurer un compactage du produit d'anti-diffusion et un pré-soudage des zones non revêtues de barrière de diffusion; puis l'étape e se poursuit par le soudage-diffusion par pression isostatique à chaud ;
f) mise en forme à chaud de l'ensemble soudé pour mise à longueur des fibres ;
g) mise en forme à chaud d'un conduit d'alimentation suivi d'un décollement des zones revêtues de produit antidiffusant;
h) gonflage par pression gazeuse et formage superplastique ;
i) usinage final.

2. Procédé de fabrication d'une aube creuse de turbomachine selon la revendication 1 dans lequel lors de ladite sous étape (e1), l'intérieur de l'ensemble d'aube (14) est maintenu à un vide compris entre 1Pa et 10⁻⁴ Pa tandis qu'une pression isostatique comprise entre 10⁵ Pa et 5x10⁵ Pa est appliquée à l'extérieur dudit ensemble d'aube, ces conditions de température et pressions étant maintenues pendant une heure.

3. Procédé de fabrication d'une aube creuse de turbomachine selon l'une des revendications 1 ou 2 dans lequel lors de la sous-étape complémentaire (e1), une mise sous vide simultanée de l'enceinte de four où est placée l'ensemble d'aube (14) est effectuée lors de la mise sous vide de l'intérieur dudit ensemble d'aube (14).

4. Procédé de fabrication d'une aube creuse de turbomachine selon l'une quelconque des revendications 1 à 3 dans lequel ledit ensemble d'aube (14) est en alliage de titane du type TA6V ou TAD4E et à la sous-étape (e1), la montée progressive de la température est effectuée à la vitesse de 5°C à 35°C par minute jusqu'à une température comprise entre 900°C et 940°C.

## Patentansprüche

1. Verfahren zur Herstellung einer hohlen Turbinenschaufel, insbesondere einer Rotorschaufel eines Gebläses mit großer Weite, bestehend aus den folgenden Schritten:
a) ausgehend von der Definition einer herzustellenden Schaufel erfolgt die Entwicklung unter Verwendung von Mitteln zum rechnerunterstützten Entwerfen (CAD) und zur rechnergestützten Fabrikation (CAM) sowie eine numerische Simulation des Flachlegens der Bestandteile der Schaufel;
b) Schmieden der Rohlinge auf der Presse,
c) Bearbeiten der Rohlinge;
d) Aufbringen von Diffusionswänden nach einem vorbestimmten Muster;
e) Zusammensetzen der Rohlinge und Einbringen in einen Ofenraum, gefolgt von einer Vorhärtungsbehandlung des Diffusionsschutzprodukts, die den Abbau und die vollständige Beseitigung des in dem Diffusionsschutzprodukt enthaltenen Bindemittels gewährleistet,
e1) sodann in direktem Anschluss und ohne die Werkstücke nach dem genannten Abbau des Bindemittels zu bewegen, Unter-Vakuum-Setzen des Inneren der Schaufelgesamtanordnung (14) und gleichzeitig ein fortschreitender Temperaturanstieg mit einer Geschwindigkeit V bis zu einer Temperatur T, die so bestimmt sind, dass eine permanente plastische Verformung der Werkstücke erzielt wird, sodann bei dieser Temperatur T Halten des Vakuums im Inneren dieser Schaufelgesamtanordnung (14), während ein isostatischer Druck außen an dieser Schaufelgesamtanordnung ausgeübt wird, wobei diese Temperatur- und Druckbedingungen aufrechterhalten werden, so dass ein Verdichten des Diffusionsschutzprodukts und ein Vorschweißen der nicht mit Diffusionswänden beschichteten Bereiche gewährleistet wird; sodann wird der Schritt e mit dem Diffusionsschweißen unter isostatischem Druck fortgesetzt;
f) Warmformen der geschweißten Gesamtanordnung, um die Fasern in die richtige Länge zu bringen;
g) Warmformen einer Versorgungsleitung, gefolgt von einem Abtrennen der Bereiche, die mit einem Diffusionsschutzprodukt überzogen sind;
h) Aufblähen unter Gasdruck und superplastisches Formen
i) Endbearbeitung.

2. Verfahren zur Herstellung einer hohlen Turbinenschaufel nach Anspruch 1, wobei in dem genannten Unterschritt e1) das Innere der Schaufelgesamtanordnung (14) unter einem Vakuum von 1Pa bis 10⁻⁴ Pa gehalten wird, während außen auf diese Schaufelgesamtanordnung ein isostatischer Druck von 10⁵Pa bis 5x 10⁵Pa ausgeübt wird, wobei diese Temperatur- und Druckbedingungen eine Stunde lang aufrechterhalten werden.

3. Verfahren zur Herstellung einer hohlen Turbinenschaufel nach einem der Ansprüche 1 oder 2, wobei in dem genannten Unterschritt e1) beim Unter-Vakuum-Setzen des Inneren dieser Schaufelgesamtanordnung (14) gleichzeitig ein Unter-Vakuum-Setzen des Ofenraums erfolgt, in den die Schaufelgesamtanordnung (14) eingeführt ist.

4. Verfahren zur Herstellung einer hohlen Turbinenschaufel nach einem der Ansprüche 1 bis 3, wobei diese Schaufelgesamtanordnung (14) aus einer Titanlegierung des Typs TA6V oder TAD4E besteht und in dem genannten Unterschritt e1) der fortschreitende Temperaturanstieg mit einer Geschwindigkeit von 5 °C bis 35 °C pro Minute bis zu einer Temperatur von 900 °C bis 940 °C erfolgt.

## Claims

1. Process for manufacturing a hollow turbomachine blade, especially a long-chord fan rotor blade, comprising the following steps of:
a) using computer-aided design and manufacture (CAD/CAM) means to create, from the definition of a blade to be produced, a design and digital simulation of the flat form of the constituent parts of the blade;
b) die-forging the primary parts in a press;
c) machining the primary parts;
d) depositing diffusion barriers in a predefined pattern;
e) assembling the primary parts and placing them in a furnace chamber, followed by a treatment to prefire the anti-diffusion product, ensuring degradation and complete removal of the binder contained in the said anti-diffusion product;
e1) then, in sequence, and without moving the parts after the said binder degradation, creating a vacuum within the said blade assembly (14) and at the same time gradually raising the temperature at a predetermined rate V up to a predetermined temperature T so that the parts undergo permanent plastic deformation at this temperature T, maintaining the vacuum within the said blade assembly (14) while isostatic pressure is applied to the outside of the said blade assembly, these temperature and pressure conditions being maintained so as to ensure compacting of the anti-diffusion product and pre-welding of the zones not coated with diffusion barrier; then step e continues with the diffusion welding by hot isostatic pressing;
f) hot-forming the welded assembly for fibre length setting;
g) hot-forming a feed duct followed by debonding of the zones coated with anti-diffusing product;
h) inflating, by gas pressure, and superplastic forming;
i) final machining.

2. Process for manufacturing a hollow turbomachine blade according to Claim 1, in which, during the said sub-step (e1) the inside of the blade assembly (14) is maintained under a vacuum of between 1 Pa and 10⁻⁴ Pa while an isostatic pressure of between 10⁵ Pa and 5x10⁵ Pa is applied to the outside of the said blade assembly, these temperature and pressure conditions being maintained for one hour.

3. Process for manufacturing a hollow turbomachine blade according to either of Claims 1 and 2, in which during the complementary sub-step (e1), a vacuum is created in the furnace chamber in which the blade assembly (14) is placed at the same time as the vacuum inside the said blade assembly (14) is created.

4. Process for manufacturing a hollow turbomachine blade according to any one of Claims 1 to 3, in which the said blade assembly (14) is made of a titanium alloy of the TA6V or TAD4E type and, in sub-step (e1) the temperature is gradually raised at a rate of 5°C to 35°C per minute until a temperature of between 900°C and 940°C is reached.
